# EUROPÄISCHE PATENTANMELDUNG

(11) **EP 4 389 310 A1**
(43) Veröffentlichungstag der Anmeldung: **26.06.2024**
(21) Anmeldenummer: 22215152.4
(22) Anmeldetag: 20.12.2022
(51) Int. Cl.: B08B 9/057, F28G 1/12, F16L 55/46

(54) **SEPARIEREN VON REINIGUNGSKÖRPERN AUS EINEM FLUIDSTROM**

(71) Anmelder: TAPROGGE GmbH, 58300 Wetter (DE)
(72) Erfinder: Altegoer, Dietmar, 58452 Witten (DE); Höckenkamp, Simon, 59348 Lüdinghausen (DE); Keller, Guido, 58093 Hagen (DE)
(74) Vertreter: Kalkoff & Partner Patentanwälte mbB

(57) **Zusammenfassung**

Die Erfindung betrifft eine Vorrichtung und ein Verfahren zur Separierung von Reinigungskörpern aus einem Fluidstrom. Eine Rohrwandung 12 dient zur Leitung des Fluidstroms von einer Zustromseite 16 zu einer Abströmseite 18. Innerhalb der Rohrwandung 12 ist ein Sieb 22 angeordnet. Das Sieb 22 weist eine kegelstumpfförmige Siebfläche 50 zur Leitung von Reinigungskörpern zu einem in Richtung der Abströmseite 18 angeordneten Reinigungskörperabzug 26 auf. Eine Abhebevorrichtung 24 umfasst mindestens einen zumindest im Wesentlichen parallel zur Siebfläche 50 angeordneten Wirbelkörper 40. Der Wirbelkörper 40 ist um eine Drehwelle 34 rotierend oder schwenkend so angeordnet, dass er die Siebfläche 50 überstreicht. Zwischen dem Wirbelkörper 40 und der Siebfläche 50 ist ein Zwischenraum 68 gebildet. Der Wirbelkörper 40 weist mindestens an dem zur Zustromseite 16 hin gerichteten Ende 72 eine Abdeckung 70 auf. Durch die Abdeckung 70 ist der Zwischenraum 68 mindestens zum Teil abgeschlossen.

## Beschreibung

Die Erfindung betrifft eine Vorrichtung und ein Verfahren zur Separierung von Reinigungskörpern aus einem Fluidstrom.

Zur Reinigung von fluiddurchflossenen Anlagen, insbesondere Rohrleitungen wie bspw. in Wärmetauschern, ist es bekannt, Reinigungskörper in den Fluidstrom zu geben, so dass diese sich mit dem Fluidstrom durch die Anlage bewegen und dabei einen Reinigungseffekt erzielen. Beispielsweise können die Reinigungskörper kugelförmig ausgebildet sein und einen Kern aus flexiblem Material wie Schwammgummi aufweisen. Bei geeigneter Abstimmung von Abmessungen (bspw. Kugeldurchmesser) und Beschaffenheit (bspw. Härtegrad) der Reinigungskörper auf die jeweilige Anlage kann so eine sehr effiziente Reinigung von Rohrleitungen erzielt werden.

Nach erfolgtem Durchlauf durch die zu reinigenden Anlagenteile werden die Reinigungskörper bevorzugt aus dem Fluidstrom, bspw. Wasserstrom, wieder entnommen.

Die DE 3938566 A1 offenbart ein Verfahren und eine Einrichtung zum Abscheiden von Reinigungskörpern aus einem Kühlwasserstrom stromabwärts eines Röhrenwärmetauschers. Die Reinigungskörper werden auf einem Sieb aufgefangen, mit einer Abhebevorrichtung vom Sieb abgehoben und einer Auslassöffnung zugeführt. Die Abhebevorrichtung erzeugt mit Hilfe von Strömungsleitelementen einen walzenförmigen Wirbel, der bis in die Sieböffnungen wirkt und dadurch Reinigungskörper und Verschmutzungen von der Siebfläche abhebt und um den Wirbelkern rotieren lässt. Durch Absaugung einer geringen Wassermenge aus dem Wirbelraum wird der Wirbelwalze eine axiale Komponente aufgeprägt, die durch eine schräge Anordnung zur Wasserströmung unterstützt werden kann. Damit werden Reinigungskörper und Verschmutzung zu der Absaugöffnung transportiert. Durch Bewegung der Wirbelwalze relativ zur Siebfläche werden nacheinander alle Bereiche des Siebs umfasst.

Es kann als Aufgabe angesehen werden, eine Vorrichtung und ein Verfahren zur Separierung von Reinigungskörpern aus einem Fluidstrom anzugeben, mit denen auf konstruktiv besonders einfache Weise ein zuverlässiger Abzug der Reinigungskörper erreicht wird.

Die Aufgabe wird gelöst durch eine Vorrichtung gemäß Anspruch 1, ein Reinigungssystem hiermit gemäß Anspruch 13 und ein Verfahren gemäß Anspruch 14. Abhängige Ansprüche beziehen sich auf vorteilhafte Ausführungsformen der Erfindung.

Die erfindungsgemäße Vorrichtung zur Separierung von Reinigungskörpern aus einem Fluidstrom wird nachfolgend vereinfachend auch als "Siebeinrichtung" bezeichnet, da sie dazu ausgelegt ist, Reinigungskörper, die zumeist kugelförmig ausgebildet sind, aus dem Fluidstrom (zumeist Wasserstrom) auszufiltern und zu entnehmen.

Die erfindungsgemäße Vorrichtung umfasst eine Rohrwandung, die zur Leitung des Fluidstroms von einer Zustromseite zu einer Abströmseite ausgebildet ist. Die Vorrichtung kann so ein Abschnitt einer Rohrleitung sein, bspw. zur Abführung von (Kühl-)Wasser von einem Wärmetauscher. Der durch die Rohrwandung gebildete Innenraum hat bevorzugt kreisförmigen Querschnitt, allerdings sind andere Querschnittsformen nicht ausgeschlossen.

Innerhalb der Rohrwandung sind ein Sieb angeordnet und mindestens ein Abzug für die Reinigungskörper. Das Sieb dient zum Zurückhalten der Reinigungskörper. Durch den Reinigungskörperabzug können die Reinigungskörper, bevorzugt Kugeln, bspw. aus Schwammgummi, abgeführt werden, bevorzugt zusammen mit einem Anteil des strömenden Fluids. Der Reinigungskörperabzug umfasst bevorzugt eine nach außen führende Leitung, die bspw. quer zur Strömungsrichtung verläuft und die Rohrwandung durchdringt. Unter der Strömungsrichtung wird dabei die Richtung von Zustromseite zur Abströmseite verstanden, bevorzugt parallel zur Wandung bzw. einer Längsmittelachse der Rohrleitung.

Ein Einlassbereich des Reinigungskörperabzugs kann dabei an verschiedenen Stellen des Querschnitts der Rohrwandung angeordnet werden, auch bspw. seitlich nahe der Wandung, ist aber bevorzugt zumindest im Wesentlichen mittig in der Rohrwandung angeordnet. Bevorzugt umfasst der Einlassbereich eine in Richtung der Zustromseite ausgerichtete Öffnung, während er in Richtung der Abströmseite abgeschlossen ist.

Das Sieb weist erfindungsgemäß eine kegelstumpfförmige Siebfläche auf, die so gebildet ist, dass sie zur Leitung der Reinigungskörper zum Reinigungskörperabzug dient. Der Einlassbereich des Reinigungskörperabzugs ist bevorzugt an der Spitze des Kegelstumpfes angeordnet und schließt bevorzugt an die Siebfläche an. Die Kegelstumpfform der Siebfläche weist im Querschnitt runde Form auf, wobei die Kegelform bevorzugt so ausgerichtet ist, dass sich die Abmessungen in Richtung der Abströmseite, d. h. in Richtung auf den Reinigungskörperabzug verjüngen. Während im Prinzip auch schräge Anordnungen denkbar sind, ist der Kegelstumpf bevorzugt mit seiner Mittelachse parallel zur Strömungsrichtung sowie zur Mittelachse der Rohrwandung ausgerichtet, besonders bevorzugt mindestens im Wesentlichen zentriert.

Während im Prinzip auch flachere Kegelformen denkbar sind, weist die bevorzugte Kegelform eine relativ steile Neigung der Kegelmantelfläche auf, so dass die Siebfläche im Längsschnitt bevorzugt mit der Längsmittelachse der Rohrwandung bzw. des Kegelstumpfes einen Winkel einschließt, der geringer als 60° ist, bspw. bei 15-60° liegt, bevorzugt bei 20-45°.

Erfindungsgemäß ist eine bewegliche Abhebevorrichtung vorgesehen mit mindestens einem bevorzugt zumindest im Wesentlichen parallel zur Siebfläche angeordneten Wirbelkörper, der lokal zur Bildung von Wirbelströmungen im Fluidstrom dienen kann. Der Wirbelkörper ist um eine Drehwelle rotierend oder schwenkend so angeordnet, dass er bei Bewegung die Siebfläche überstreicht. Bevorzugt ist der Wirbelkörper von länglicher Form, d. h. er weist bevorzugt eine Länge auf, die mindestens dem doppelten seiner Breite, bevorzugt mindestens dem 5-fachen seiner Breite entspricht. Der Wirbelkörper ist bevorzugt gerade und kann bspw. eine Profilform aufweisen, d. h. eine über die Länge zumindest im Wesentlichen gleichbleibende Querschnittsform. Der Wirbelkörper hat bevorzugt im Wesentlichen die Länge der Siebfläche (gemessen im Längsschnitt). Die Anordnung des Wirbelkörpers relativ zur Siebfläche kann abweichend von einer exakt parallelen Ausrichtung auch eine geringfügige Schrägstellung von bspw. nicht mehr als 10°, bevorzugt nicht mehr als 5° umfassen. Bevorzugt ist der Wirbelkörper dabei in einem geringen Abstand zur Siebfläche angeordnet, so dass er diese bevorzugt über die gesamte Länge überstreicht aber nicht berührt.

Die Abhebevorrichtung ist erfindungsgemäß so ausgebildet, dass zwischen dem Wirbelkörper und der Siebfläche ein Zwischenraum gebildet ist. Der Zwischenraum kann insbesondere dargestellt werden in einem Querschnitt durch den Wirbelkörper und die darunter befindliche Siebfläche. Die Abmessungen des Zwischenraums werden dabei verstanden als begrenzt durch jeweils zur Siebfläche lotrechte Linien bis zu den äußeren Kanten des Wirbelkörpers.

Der Wirbelkörper bewirkt bei der Bewegung über die Siebfläche die Bildung von Wirbeln in der von der Zustromseite zur Abströmseite gerichteten Fluidströmung. Diese Wirbel bewirken einerseits ein Abheben von Verschmutzung von der Siebfläche und andererseits einen Transport von temporär dort anwesenden Reinigungskörpern.

Dabei weist der Wirbelkörper erfindungsgemäß mindestens an einem Ende, nämlich dem zur Zustromseite hin gerichteten Ende (nachfolgend zur Vereinfachung gelegentlich auch als "oberes" Ende bezeichnet), eine Abdeckung auf, durch die der Zwischenraum mindestens zum Teil abgeschlossen ist.

Wie sich gezeigt hat, beeinflusst dies zusätzlich die Strömungsverhältnisse am Wirbelkörper und somit den Transport der Reinigungskörper. Durch die Abdeckung ergibt sich ein verstärkter Strömungsanteil in Längsrichtung des Wirbelkörpers und entlang des Zwischenraums in Richtung auf den Reinigungskörperabzug. Hierdurch werden die Reinigungskörper am Abzug konzentriert und gesammelt, was die Abführung mit einer vergleichsweisen geringen Menge an Fluid ermöglicht und eine Verbesserung durch Reduzierung der für die Abführung der Reinigungskörper notwendigen Fluidmenge darstellt.

Die Abhebevorrichtung ist bevorzugt so angeordnet, dass die Drehwelle in der Längsachse des durch die Siebfläche gebildeten Kegelstumpfs liegt. Der Wirbelkörper kann mit einer Halterung an der Drehwelle so angeordnet sein, dass sich die Drehwelle, die Halterung und der Wirbelkörper zusammen rotierend bewegen können, worunter neben einer gleichförmigen Rotation in einer Richtung auch andere Bewegungsmuster verstanden werden wie bspw. intermittierende Rotation, abwechselndes Schwenken in entgegengesetzte Richtungen, etc.

Die erfindungsgemäße Vorrichtung und das durch deren Betrieb ausgeführte erfindungsgemäße Verfahren ermöglichen bei einfachem konstruktivem Aufbau der Vorrichtung eine sehr gute Funktionalität, einerseits im Hinblick auf den Transport von Reinigungskörpern sowie von andererseits auch zur Reinigung der Siebfläche durch Abheben von Verschmutzungen. Zwar können weitere Teile bei Bedarf beweglich gestaltet sein, tatsächlich notwendig ist aber nur die Beweglichkeit des Wirbelkörpers (oder ggf. auch mehrerer Wirbelkörper) gegenüber der Siebfläche, während andere Teile der Vorrichtung feststehend sein können.

Größe und Form der Abdeckung am oberen Ende des Wirbelkörpers können je nach Gestaltung und gewünschtem Effekt verschieden gewählt werden. Gemäß einer Weiterbildung der Erfindung kann die Abdeckung so ausgebildet sein, dass sie von der Querschnittsfläche des Zwischenraums mindestens 5% abdeckt. Während es möglich ist, dass die Abdeckung den gesamten Zwischenraum überdeckt, wird bevorzugt nicht mehr als 80% der Querschnittsfläche durch die Abdeckung abgedeckt. Als besonders geeignet angesehen wird eine Abdeckung von 10-40% der Querschnittsfläche, besonders bevorzugt 10-30%. Bei dieser Auslegung der Abdeckung haben sich günstige Strömungsverhältnisse für einen Transport der Reinigungskörper entlang der Länge des Wirbelkörpers gezeigt.

Für die Gestaltung des Wirbelkörpers kommen verschiedene Formen, insbesondere Querschnittsformen in Frage. Insbesondere kann der Wirbelkörper eine Querschnittsform aufweisen, die einen in Richtung der Siebfläche offenen, in entgegengesetzter Richtung aber abgeschlossenen Innenraum aufweist, also konkav ausgebildet ist. Der Wirbelkörper kann dabei auf der der Siebfläche zugewandten Seite bevorzugt zwei parallele Abschlusskanten aufweisen, die weiter bevorzugt in gleichem Abstand von der Siebfläche angeordnet sind. Weiter bevorzugt ist die Querschnittsform des Wirbelkörpers gegenüber dem Lot zur Siebfläche symmetrisch gestaltet.

Als mögliche Querschnittsform kann der Wirbelkörper bspw. als Teil eines Kreisbogens geformt sein (bevorzugt mit der konkaven Seite in Richtung der Siebfläche), oder alternativ bspw. gewinkelt, in Polygonform, in U-Form (bevorzugt mit der offenen Seite in Richtung der Siebfläche) oder in T-Form (bevorzugt mit der flachen Seite in Richtung der Siebfläche).

Gemäß einer besonders bevorzugten Ausführungsform kann der Wirbelkörper im Querschnitt eine hier als Dachform bezeichnete Gestaltung aufweisen mit zwei unter einem Winkel angeordneten (Dach-)Schenkeln. Der von den Schenkeln eingeschlossene Winkel kann bspw. 60-120°, bevorzugt 70-100° zueinander betragen. Die Dachschenkel haben dabei bspw. eine Länge von 30-120mm, bevorzugt von 50-70mm. Bevorzugt sind die beiden Schenkel gleich lang.

Der Abstand des Wirbelkörpers zur Siebfläche beträgt gemäß einer bevorzugten Ausführungsform 20 - 80mm, besonders bevorzugt 30 - 50 mm. Gemessen werden kann der Abstand bevorzugt als das kürzeste Lot von der Siebfläche zu einem Teil des Wirbelkörpers.

Konstruktiv kann das Sieb im Prinzip auf verschiedene Weise aufgebaut sein, darunter bspw. auch als Drahtsieb oder Lochblech. Bevorzugt ist das Sieb mit einer Mehrzahl von parallelen Siebstäben aufgebaut, zwischen denen Sieb-Zwischenräume als Schlitze gebildet sind. Die Siebstäbe können verschiedene Querschnittsformen aufweisen, bspw. rund, quadratisch oder dreieckförmig. Besonders bevorzugt ist ein Sieb mit Siebstäben rechteckigen Querschnitts. Besonders bevorzugt ist dabei die Höhe der Querschnittsform (d.h. die Dimension quer zur Siebfläche) größer als die Dicke (d.h. die Dimension parallel zur Siebfläche) und entspricht weiter bevorzugt mindestens den doppelten, so dass das Verhältnis Höhe/Dicke mindestens 2 entspricht, besonders bevorzugt im Bereich 5-20 liegt.

In einer bevorzugten Ausführungsform sind die Siebstäbe dabei parallel zueinander und bevorzugt schräg in Strömungsrichtung angeordnet, d. h. der Richtung von Zustromseite zur Abströmseite, und bevorzugt auch der Längsmittelachse der Rohrwandung. Der schräge Verlauf der Siebstäbe entspricht dabei dem schrägen Verlauf der Siebfläche im Längsschnitt. Hierdurch strömt das Fluid zumindest zum Teil entlang der Siebstäbe, was Störungen der Strömung minimiert und zu einem möglichst geringen Druckverlust führt. Besonders bei der bevorzugten steilen Form des Kegelstumpfes erstrecken sich die Siebstäbe (bei Betrachtung einer Vektorzerlegung) überwiegend in Strömungsrichtung.

Gemäß einer bevorzugten Ausführungsform der Erfindung kann das Sieb mit der kegelstumpfförmigen Siebfläche einen oder mehrere Zugstäbe aufweisen, die kreis- oder teilkreisförmig gebogen sind. Siebstäbe können dann mit den Zugstäben verbunden sein. So kann das gesamt Sieb oder es können Segmente des Siebs so aufgebaut sein, dass bspw. zwei oder mehr kreisförmige oder teilkreisförmige, parallele Zugstäbe mit unterschiedlichem Biegeradius quer verbunden sind durch Siebstäbe. Die Siebstäbe können an den Zugstäben auf verschiedene Weise befestigt sein, bspw. daran angeschweißt. Besonders bevorzugt sind die Siebstäbe durchbohrt und werden von den Zugstäben durchdrungen. Dies ist insbesondere bei Siebstäben mit rechteckigem Querschnitt vorteilhaft. Weiter bevorzugt können zwischen den Siebstäben Abstandhalter angeordnet sein, bevorzugt an den Zugstäben, bspw. in Form von Hülsen, die die Zugstäbe umgeben. So kann eine gewünschte Anordnung der Siebstäbe im Abstand zueinander und besonders bevorzugt parallel zueinander erreicht werden.

Gemäß einer bevorzugten Ausführungsform können die Siebstäbe unterschiedliche Länge aufweisen. Während bei dem kegelstumpfförmigen Sieb bspw. einige Siebstäbe vollständig durchgehend sein können, können andere Siebstäbe eine geringere Länge aufweisen. Dies ermöglicht eine parallele Anordnung benachbarter Siebstäbe zueinander. Eine solche Anordnung kann für ein einteiliges Sieb ebenso gewählt werden wie für eine bevorzugte mehrteilige Ausführung des Siebs mit einer Mehrzahl von Segmenten. Auch innerhalb der Segmente sind die Siebstäbe bevorzugt parallel zueinander angeordnet und weisen unterschiedliche Länge auf.

Als Teil des Aufbaus des Siebs kann ein Halteelement vorgesehen sein, das sich - entlang der Siebfläche - schräg in Strömungsrichtung erstreckt. Ein Segment des Siebs kann bspw. durch zwei Halteelemente seitlich begrenzt sein, wobei sich bevorzugt Zugstäbe zwischen den Halteelementen erstrecken. Das Halteelement weist bevorzugt treppenförmige Absätze auf. Siebstäbe können dann so angeordnet werden, dass zumindest ein Teil der Siebstäbe in den treppenförmigen Absätzen endet. So werden zwischen benachbarten Siebstäben Sieb-Zwischenräume als Siebschlitze gebildet, die zumindest an einem Ende am treppenförmigen Absatz einen quer verlaufenden, bevorzugt rechtwinklig zu den Siebstäben verlaufenden Abschluss aufweisen anstatt eines spitzen Zusammenlaufens, an dem besonders faserförmige Verschmutzungen vermehrt haften könnten.

Gemäß einer bevorzugten Ausführungsform ist am Reinigungskörperabzug ein Siebkorb angeordnet, d. h. ein Bereich, der zumindest teilweise und bevorzugt überwiegend nicht mit geschlossener Wandung, sondern mit Sieb-Wandung ausgestattet ist. Bevorzugt ist der Siebkorb von zylindrischer Form und weist in radialer Richtung eine Sieb-Wandung auf. Der Siebkorb ist bevorzugt mittig innerhalb der Rohrwandung angeordnet. Bevorzugt bildet der Siebkorb die Spitze des durch die Siebfläche gebildeten Kegelstumpfs. Der Siebkorb geht bevorzugt in einen Eingangsbereich des Reinigungskörperabzugs über.

Die vorstehend beschriebene Vorrichtung zur Separierung von Reinigungskörpern kann Teil eines Reinigungssystems für einen Wärmetauscher sein. Das Reinigungssystem umfasst eine an einer Kühlwasserleitung stromaufwärts des Wärmetauschers angeordnete Vorrichtung zur Einspeisung von Reinigungskörpern. Die beschriebene Vorrichtung zur Separierung der Reinigungskörper ist stromabwärts des Wärmetauschers angeordnet, um die Reinigungskörper nach Durchlaufen des Wärmetauschers wieder aufzufangen und zu entnehmen.

Nachfolgend werden Ausführungsformen der Erfindung anhand von Zeichnungen näher beschrieben. Dabei zeigen:
- Figur 1: einen Längsschnitt durch eine Ausführungsform einer Vorrichtung zur Separierung von Reinigungskörpern mit einem Sieb und einem Reinigungskörperabzug in einer Rohrleitung;
- Figur 2, 3: das Sieb und der Reinigungskörperabzug aus Figur 1 in Draufsicht und perspektivische Ansicht;
- Figur 4-6: Segmente des Siebs aus Figur 2, 3 in perspektivischer Ansicht, Seitenansicht und Frontansicht;
- Figur 6a: eine schematische Schnitt-Darstellung eines Teils eines Segments aus Fig. 4 - 6;
- Figur 7a, 7b: ein erstes und ein zweites Ende eines Wirbelkörpers gemäß einer ersten Ausführungsform der Vorrichtung aus Figur 1;
- Figur 8a, 8b: eine teilweise schematische Darstellung eines Schnitts durch eine Siebebene mit darüber angeordnetem Wirbelkörper gemäß Figur 7a, 7b;
- Figur 9-11: teilweise schematische Darstellungen von Querschnittsformen von Wirbelkörpern gemäß einer zweiten, dritten und vierten Ausführungsform.

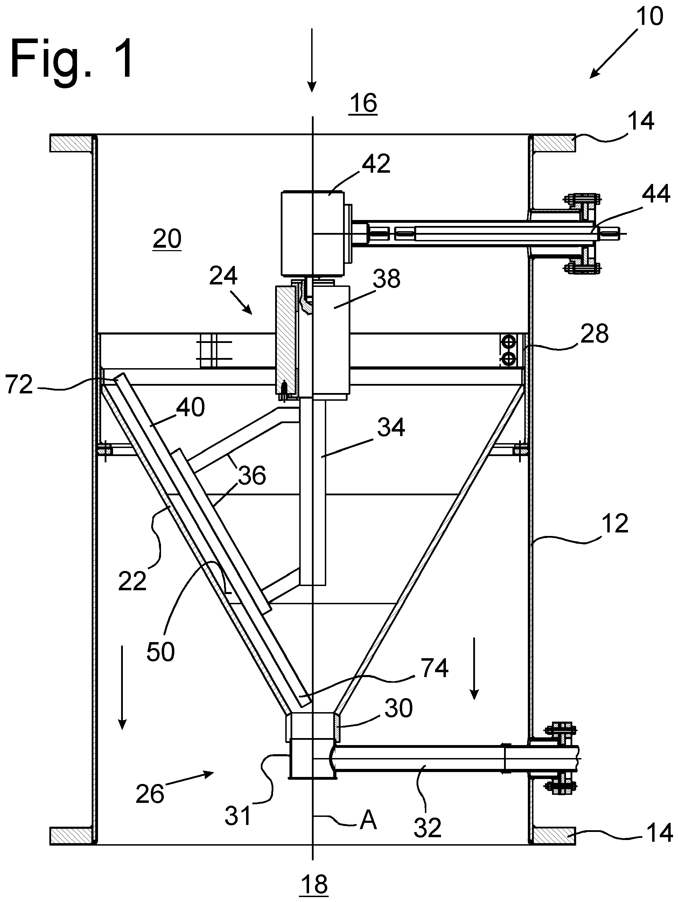

Figur 1 zeigt eine Ausführungsform einer Vorrichtung 10 zur Separierung von Reinigungskörpern aus einem Fluidstrom.

Dabei handelt es sich bei der gezeigten Vorrichtung um einen Teil eines Reinigungssystems für einen Wärmetauscher (nicht dargestellt), bei dem in an sich bekannter Weise stromaufwärts des Wärmetauschers Reinigungskörper in Form von Schwammgummi-Reinigungskugeln in einem Kühlwasserstrom eingespeist werden, die die Rohre des Wärmetauschers mit dem Kühlwasserstrom durchlaufen und dabei reinigen. Die Vorrichtung 10, welche nachfolgend vereinfachend auch als Siebeinrichtung 10 bezeichnet wird, ist stromabwärts des Wärmetauschers angeordnet und dient zur Separierung und Entnahme der Reinigungskörper aus dem Kühlwasserstrom.

Hierfür weist die Siebeinrichtung 10 wie beispielhaft in Figur 1 im Längsschnitt gezeigt eine zylindrische Rohrleitung mit einer Rohrwandung 12 auf, die einen zylindrischen Innenraum 20 umgrenzt. Flansche 14 dienen zum Anschluss an vorausgehende und nachfolgende Abschnitte der Rohrleitung, bspw. innerhalb des oben skizzierten Systems. Dabei ist die Siebeinrichtung 10 so angeordnet, dass die Strömungsrichtung des Wassers durch die Rohrleitung wie in Figur 1 durch Pfeile angedeutet von einer in Fig. 1 oberen Zustromseite 16 zu einer unteren Abströmseite 18 gerichtet ist.

Die Siebeinrichtung 10 umfasst im Innenraum 20 ein kegelstumpfförmiges Sieb 22, eine Abhebevorrichtung 24 und einen Reinigungskörperabzug 26.

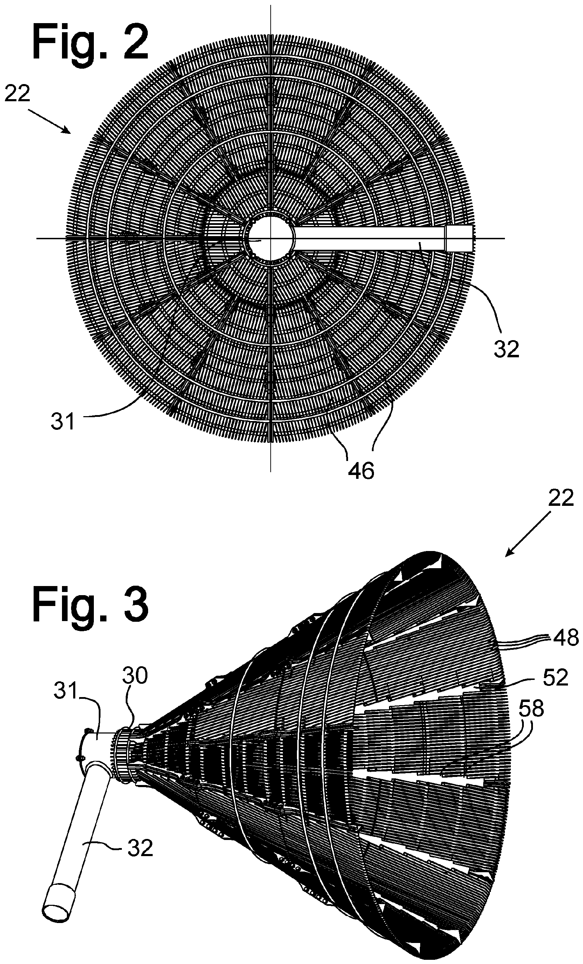

Das Sieb 22 weist eine kegelstumpfförmige Siebfläche 50 auf und ist mittig im Innenraum 20 angeordnet, so dass seine Längsmittelachse mit einer Längsmittelachse A der Rohrleitung zusammenfällt. Das Sieb 22 ist dabei so angeordnet, dass es sich in Strömungsrichtung verjüngt. Ausgehend von einer äußeren Befestigung 28 an der Wandung 12, wo das Sieb 22 den gesamten Querschnitt der Rohrleitung abdeckt, führt die Siebfläche des Siebs 22 auf einen zylindrischen Siebkorb 30, an den der Reinigungskörperabzug 26 angeschlossen ist mit einem Fangtopf 31 und einer quer zur Achse A verlaufenden Abzugsleitung 32, die durch die Rohrwandung 12 nach außen führt. Wie aus Figur 3 ersichtlich ist, sind die Wände des Fangtopfes 31 geschlossen, während die Wandung des zylindrischen Siebkorbs 30 aus vorzugsweise parallelen Siebstäben gebildet ist.

Die Abhebevorrichtung 24 umfasst eine Drehwelle 34, an der mit einem Halter 36 ein länglicher Wirbelkörper 40 so angebracht ist, dass er mit der Drehwelle 34 um die Achse A rotiert. Hierzu ist die Drehwelle 34 in einem Lager 38 gelagert und über ein Umlenkgetriebe 42 und eine durch die Rohrwandung 12 hindurchtretende Antriebswelle 44 gekoppelt mit einem drehenden Antrieb (nicht dargestellt).

Der Wirbelkörper 40 ist parallel zur Siebfläche 50 und in einem Abstand zu dieser so angeordnet, dass er sich über die gesamte Länge des Siebs 22 erstreckt. Bei der durch die Antriebswelle 40 angetriebenen Rotation der Einheit aus Drehwelle 34, Halter 36 und Wirbelkörper 40 überstreicht der Wirbelkörper 40 so die gesamte Siebfläche 50.

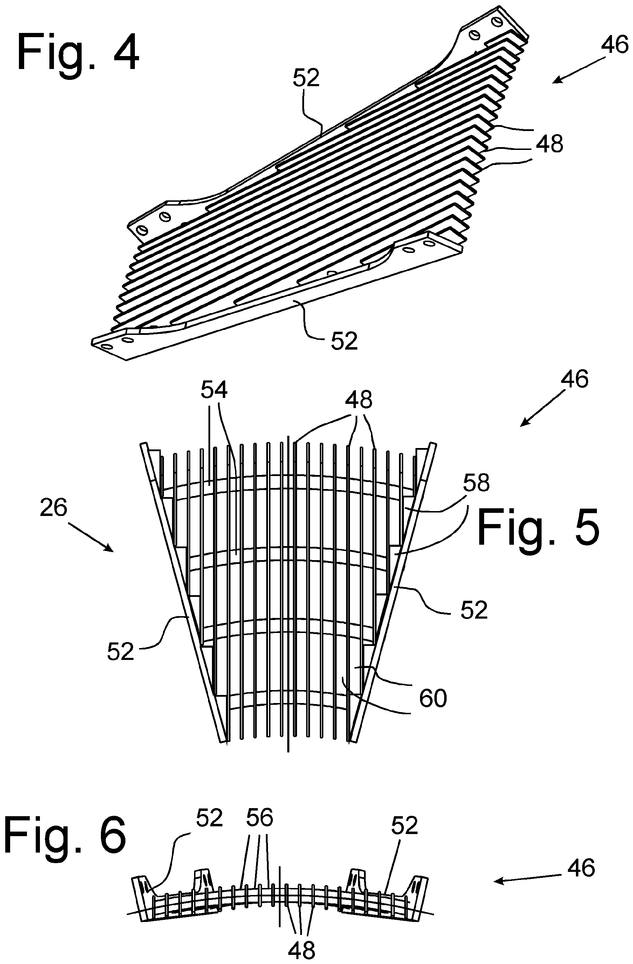

Das Sieb 22 ist gesondert dargestellt in Figur 2 in einer Ansicht von unten und in Figur 3 in einer perspektivischen Ansicht. Wie dort ersichtlich ist die Kegelstumpf-Form gebildet aus einer Anzahl von Segmenten 46, von denen eines in Figur 4-6 gesondert dargestellt ist. Die Segmente 46 sind zur Bildung des Siebs 22 sowohl seitlich, d. h. in Umfangsrichtung des Kegelstumpfes als auch untereinander, d. h. in Richtung auf den Fangtopf 31, zusammengefügt.

Wie in Figur 4-6 gezeigt sind die Segmente 46 des Siebs 22 jeweils aufgebaut aus parallelen Siebstäben 48, die zwischen Halteelementen 52 angeordnet und quer verbunden sind durch quer verlaufende, gebogene Zugstäbe 54.

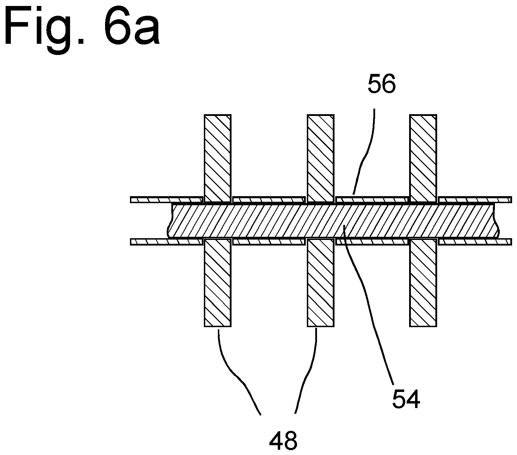

Die Siebstäbe 48 weisen, wie insbesondere aus Fig. 6a ersichtlich ist, rechteckförmigen Querschnitt auf, in der bevorzugten Ausführungsform mit einer Höhe von 20 mm und einer Dicke von 2 mm.

Wie weiter aus Figur 6a ersichtlich sind die Siebstäbe 48 durchbohrt und werden von den Zugstäben 54 durchdrungen. Durch Abstandshülsen 56, die die Zugstäbe 54 umgeben, werden die Siebstäbe 48 parallel im Abstand voneinander gehalten.

Wie insbesondere aus Figur 5 ersichtlich ist, unterscheiden sich die Siebstäbe 48 des dargestellten Segments 46 hinsichtlich ihrer Länge. Während sich die mittleren Siebstäbe 48 über die volle Länge des Segments 46 erstrecken, sind die äußeren Siebstäbe 48 kürzer und enden in treppenförmigen Absätzen 58 der Halteelemente 52. Dabei können je nach gewünschter Ausführung die treppenartigen Absätze 58 mit den Halteelementen 52 einstückig gebildet sein, bevorzugt werden die Absätze 58 aber gebildet durch dreieckförmige Abdeckungen, die separat angebracht, bspw. geschweißt werden. Die dreieckigen Abdeckungen können dabei wie in Fig. 5 dargestellt bspw. auf der Innenseite des Siebs 22 angeordnet sein.

Durch die treppenförmigen Absätze 58 und parallele Anordnung der Siebstäbe 48 ist sichergestellt, dass Sieb-Zwischenräume rechteckigen Querschnitt haben. Die Siebstäbe 48 bilden so keine Verengungen, in denen sich bevorzugt Verschmutzungen ansetzen würden.

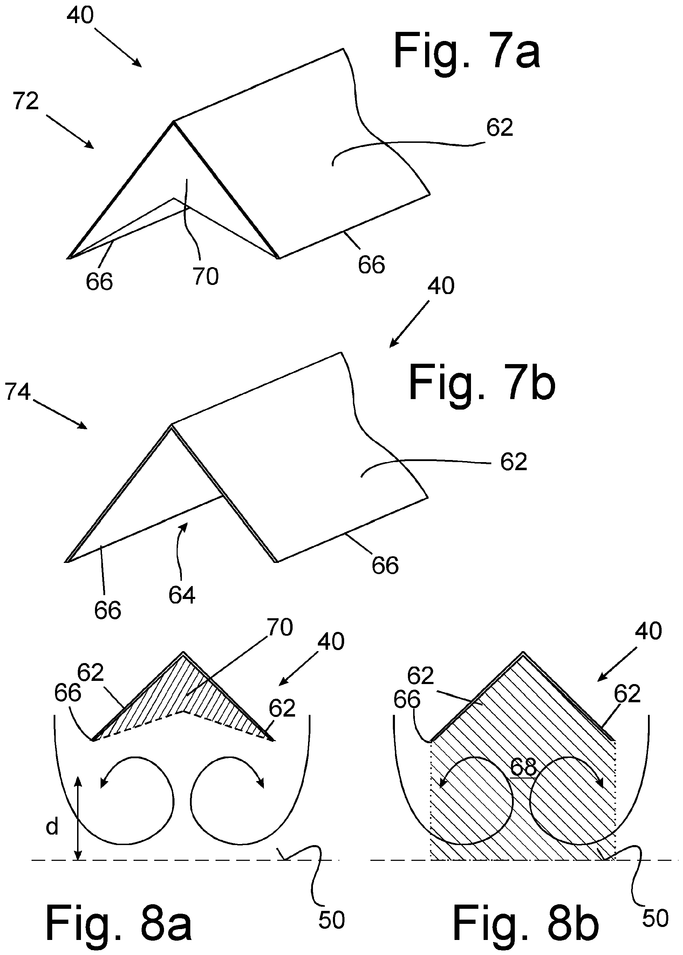

Der Wirbelkörper 40 ist als schmale, längliche Leiste mit einer durchgehenden Profilform ausgebildet. Figur 7a, 7b, 8a, 8b zeigen die Form des Wirbelkörpers 40 gemäß einer ersten Ausführungsform.

Der Wirbelkörper 40 weist eine Profilform auf, die einer Dachform mit zwei im gezeigten Beispiel gleich langen Dachschenkeln 62 entspricht, die zueinander unter einem Innenwinkel von ca. 90° angeordnet sind. So wird ein Innenraum 64 des Wirbelkörpers 40 aufgespannt, der nach unten, d. h. in Richtung der Siebfläche 50 geöffnet ist.

Die Anordnung des Wirbelkörpers 40 relativ zur Siebfläche 50 ist insbesondere aus Figur 8a, 8b ersichtlich. Wie dort dargestellt verbleibt zwischen unteren Kanten 66 der Dachschenkel 62 unter der Siebfläche 50 ein Abstand d. So wird der in Figur 8b schraffiert gezeigte Zwischenraum 68 gebildet, der sich unterhalb der Dachschenkel 62 befindet und seitlich begrenzt ist durch lotrechte Projektion der Kanten 66 auf die Siebfläche 50, sich also zusammensetzt aus dem nach unten geöffneten Innenraum 64 des Wirbelkörpers 40 und dem durch den Abstand d gegebenen rechteckigen Bereich.

Dabei ist die Querschnittsform des Wirbelkörpers 40 durchgehend gleichbleibend wie in Figur 7b, 8b gezeigt mit Ausnahme seines in Richtung der Zustromseite 16 weisenden Endes 72 (s. Figur 1), das hier der Einfachheit halber als oberes Ende 72 bezeichnet wird.

Figur 7a zeigt das obere Ende des Wirbelkörpers 40. Wie dort dargestellt ist der Innenraum 64 des Wirbelkörpers 40 am oberen Ende 72 durch eine Abdeckung 70 teilweise abgeschlossen. Die Abdeckung 70 verdeckt in Längsrichtung des Wirbelkörpers 40 gesehen einen Teil des Innenraums 64 bzw. ebenso einen Teil des gesamten Zwischenraums 68 zur Siebfläche 50.

Am dem oberen Ende 72 gegenüberliegenden unteren Ende 74 des Wirbelkörpers 40 ist keine Abdeckung vorgesehen, hier bleibt der Innenraum 64 in Längsrichtung offen (Figur 7b).

Durch die Form und Anordnung des Wirbelkörpers 40 wie dargestellt und vorstehend beschrieben in einem Fluidstrom, hier insbesondere einem Wasserstrom in Strömungsrichtung von der Zustromseite 16 zur Abströmseite 18, bilden sich definierte, sehr vorteilhafte Strömungsverhältnisse aus. Aufgrund der Umströmung des Wirbelkörpers 40, hier der Dachschenkel 62, bilden sich wie in Figur 8a, 8b angedeutet Wirbelströmungen aus. Diese Wirbelströmungen verändern lokal die Strömungsrichtung und kehren diese zum Teil um, insbesondere im Bereich der Siebfläche 50. Hierdurch können von dort Verschmutzungen und Ablagerungen abgelöst werden. Insbesondere werden so auch Reinigungskörper gelöst, die temporär auf der Siebfläche 50 verweilen, so dass sie sich entlang der Siebfläche 50 in Richtung des Reinigungskörperabzugs 26 bewegen können.

Diese Bewegung wird unterstützt durch eine Längskomponente der Wirbelströmung, die aus der teilweisen Abdeckung des Zwischenraums 68 resultiert. Die am oberen Ende 72 des Wirbelkörpers 40 angebrachte Abdeckung 70 bewirkt somit Strömungsverhältnisse, die einen Transport von Reinigungskörpern entlang des Wirbelkörpers 40 bis zum Reinigungskörperabzug 26 unterstützten.

Hinsichtlich der Dimensionierung der Abdeckung 70 gehen die Erfinder davon aus, dass - in Längsrichtung des Wirbelkörpers 40 gesehen, wie bspw. in Figur 8a, 8b dargestellt - das Verhältnis der abgedeckten Fläche (s. schraffierten Bereich in Figur 8a) zur Fläche des gesamten Zwischenraums 68 (s. schraffierte Fläche in Figur 8b) maßgeblich ist. Der Effekt einer Längskomponente der entstehenden Strömung ist demnach zu beobachten bereits bei einem geringen Grad der Abdeckung von bspw. mindestens 5%. Es kann aber auch ein erheblich höherer Anteil der den Zwischenraum 68 ausmachenden Fläche abgedeckt sein, bspw. bis zu 80% und mehr, d. h. die Abdeckung 70 kann auch den gesamten Innenraum 64 des Wirbelkörpers 40 abdecken und sogar über die Kanten 66 in Richtung der Siebfläche 50 hinausragen. Gute Strömungsverhältnisse können erzielt werden bspw. bei einer Größe der Abdeckung 70, die 10 - 40%, besonders bevorzugt 10 - 30% der den Zwischenraum 68 bildenden Fläche entspricht.

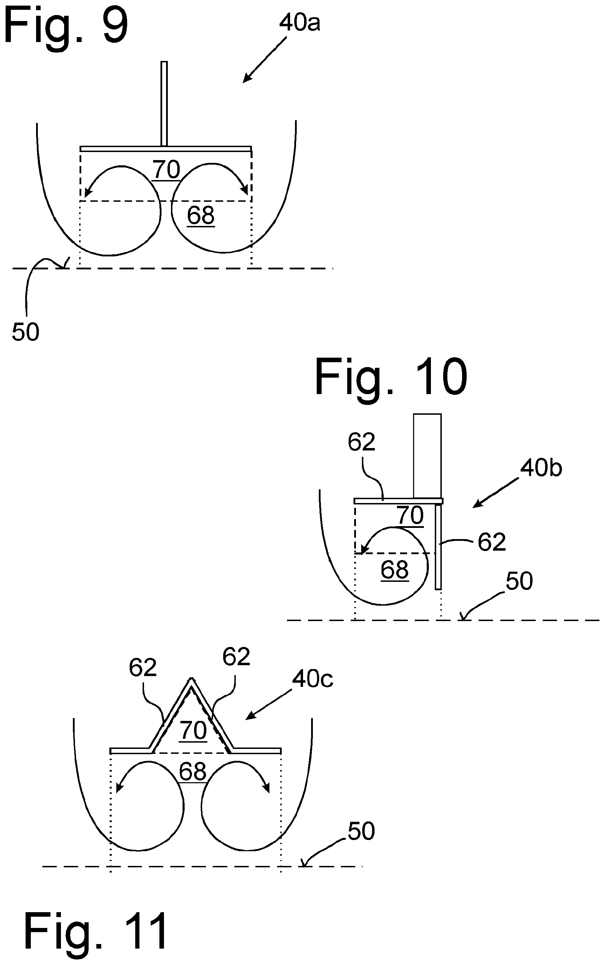

Während sich die in Figur 7a-8b gezeigte Dachform des Wirbelkörpers 40 als besonders geeignet erwiesen hat, sind sehr verschiedene Ausgestaltungen möglich. Figuren 9 - 11 zeigen entsprechende Beispiele. Dabei ist jeweils das Profil der Wirbelkörper 40 mit durchgezogenen Linien gezeigt, Form und Größe der frontseitigen Abdeckung 70 mit gestrichelten Linien und der Zwischenraum 68 mit gepunkteten Linien.

Bei einer zweiten Ausführungsform eines Wirbelkörpers 40a gemäß Figur 9 wird ein T-Profil verwendet, dessen flache Seite der Siebfläche 50 zugewandt ist. Der Zwischenraum 68 ist jeweils begrenzt durch die lotrechte Projektion von der Siebfläche 50 zu dem Kanten der flachen Seite des T-Profils, die in diesem Fall nicht vorstehen. Die Abdeckung 70 ist als in Richtung der Siebfläche 50 vorstehendes Rechteckblech ausgebildet.

Bei einer dritten Ausführungsform eines Wirbelkörpers 40b gemäß Figur 10 weist der Wirbelkörper 40b eine 90°-Winkelform auf, die allerdings im Unterschied zur ersten Ausführungsform nicht symmetrisch ausgerichtet ist zum Lot der Siebfläche 50, sondern ein Schenkel 62 ist parallel zur Siebfläche 50 und der zweite Schenkel 62 senkrecht zur Siebfläche 50 ausgebildet. Die Abdeckung 70 ist hier ebenfalls rechteckig geformt.

Bei der dritten Ausführungsform gemäß Figur 11 ist ein Wirbelkörper 40c als Dachform mit zwei Schenkeln 62 gebildet, an die sich allerdings in diesem Fall Verlängerungen anschließen, die sich parallel zur Siebfläche 50 erstrecken. Als Abdeckung 70 ist ein dreieckiges Blech vorgesehen, das in diesem Fall den gesamten Innenraum 64 abdeckt.

Im Betrieb der Siebeinrichtung 10 wird bei Reinigung eines stromaufwärts gelegenen Anlagenteils wie eines Wärmetauschers von der Zustromseite 16 ein Wasserstrom mit darin enthaltenen Reinigungskörpern zugeführt. Der Querschnitt der durch die Rohrwandung 12 gebildeten Rohrleitung ist durch das Sieb 22 vollständig abgedeckt und die Zwischenräume 60 des Siebs 22 sind so dimensioniert, dass die Reinigungskörper nicht zur Abströmseite 18 gelangen können, sondern vom Sieb 22 aufgehalten und in Richtung des Reinigungskörperabzugs 26 geleitet werden. Dort gelangen sie in den Fangtopf 31 und werden über die Abzugsleitung 32 zusammen mit einer gewissen Wassermenge abgesaugt.

Unterstützt wird dies durch den Betrieb der Abhebevorrichtung 24. Dazu wird die Drehwelle 34 mittels der Antriebswelle 44 drehend angetrieben, so dass sie um die Achse A rotiert und dabei der Wirbelkörper 40 die Siebfläche 50 überstreicht. Die Rotation kann dabei durchgehend in gleicher Richtung erfolgen, ebenso aber auch in abwechselnden Schwenkbewegungen in entgegengesetzten Richtungen.

Wenn der Wirbelkörper 40 die Siebfläche 50 überstreicht, werden im Wasserstrom des Innenraums 20 lokal wie beschrieben Wirbelströmungen ausgelöst, die zudem eine Längskomponente in Richtung auf den Reinigungskörperabzug 26 aufweisen. Hierdurch werden Reinigungskörper von der Siebfläche 50 abgehoben und in Richtung des Siebkorbs 30 und dahinter gelegenen Fangtopfes 31 gefördert. Zudem kommt es durch die Wirbelströmung zum Lösen eventuell am Sieb 22 anhaftender Verschmutzungen.

Die vorstehend gezeigten Ausführungsformen sind lediglich beispielhaft zu verstehen, tatsächlich kann die Erfindung auf verschiedene Weise ausgeführt werden und es sind zu den gezeigten Ausführungsformen zahlreiche Änderungen möglich. So kann bspw. die Form des Siebs 22 variieren, so dass die Siebfläche 50 flacher oder steiler verläuft als in Beispiel von Figur 1 gezeigt, in dem der zwischen der Achse A und der Siebfläche 50 eingeschlossene Winkel ca. 30° beträgt. Statt lediglich eines Wirbelkörpers 40 können an der Drehachse der Drehwelle 34 mehrere Wirbelkörper angebracht sein, die gemeinsam die Siebfläche 50 überstreichen.

### Bezugszeichenliste

- A: Längsmittelachse
- 10: Vorrichtung zur Separierung von Reinigungskörpern (Siebeinrichtung)
- 12: Rohrwandung
- 14: Flansche
- 16: Zustromseite
- 18: Abströmseite
- 20: Innenraum
- 22: Sieb
- 24: Abhebevorrichtung
- 26: Reinigungskörperabzug
- 28: Befestigung
- 30: Siebkorb
- 31: Fangtopf
- 32: Abzugsleitung
- 34: Drehwelle
- 36: Halter
- 38: Lager
- 40: Wirbelkörper
- 42: Umlenkgetriebe
- 44: Antriebswelle
- 46: Segmente
- 48: Siebstäbe
- 50: Siebfläche
- 52: Halteelemente
- 54: Zugstäbe
- 56: Abstandshülsen
- 58: treppenförmige Absätze
- 60: Sieb-Zwischenräume
- 62: Dachschenkel
- 64: Innenraum des Wirbelkörpers
- 66: Kanten der Dachschenkel
- 68: Zwischenraum
- 70: Abdeckung
- 72: oberes Ende des Wirbelkörpers
- 74: unteres Ende des Wirbelkörpers

## Patentansprüche

1. Vorrichtung zur Separierung von Reinigungskörpern aus einem Fluidstrom, mit
- einer Rohrwandung (12) zur Leitung des Fluidstroms von einer Zustromseite (16) zu einer Abströmseite (18),
- einem innerhalb der Rohrwandung (12) angeordnetem Sieb (22) mit kegelstumpfförmiger Siebfläche zur Leitung von Reinigungskörpern zu einem in Richtung der Abströmseite (18) angeordneten Reinigungskörperabzug (26),
- einer Abhebevorrichtung (24) mit mindestens einem zumindest im Wesentlichen parallel zur Siebfläche (50) angeordneten Wirbelkörper (40), wobei der Wirbelkörper (40) um eine Drehwelle (34) rotierend oder schwenkend so angeordnet ist, dass er die Siebfläche (50) überstreicht,
- wobei zwischen dem Wirbelkörper (40) und der Siebfläche (50) ein Zwischenraum (68) gebildet ist,
- wobei der Wirbelkörper (40) mindestens an dem zur Zustromseite (16) hin gerichteten Ende (72) eine Abdeckung (70) aufweist, durch die der Zwischenraum (68) mindestens zum Teil abgeschlossen ist.

2. Vorrichtung nach Anspruch 1, bei der
- der Zwischenraum (68) eine Querschnittsfläche aufweist,
- und die Abdeckung (70) mindestens 5% der Querschnittsfläche des Zwischenraums (68) abdeckt.

3. Vorrichtung nach einem der vorangehenden Ansprüche, bei der
- Der Wirbelkörper (40) im Querschnitt eine Dachform mit zwei unter einem Winkel von 60-120° angeordneten Dachschenkeln (62) aufweist.

4. Vorrichtung nach einem der Ansprüche 1, 2, bei der
- der Wirbelkörper (40) im Querschnitt eine Teilkreisform, gewinkelte Form, U-Form, T-Form oder Polygonform aufweist.

5. Vorrichtung nach einem der vorangehenden Ansprüche, bei der
- der Wirbelkörper (40) einen Abstand (d) von der Siebfläche (50) von 20-80 mm aufweist.

6. Vorrichtung nach einem der vorangehenden Ansprüche, bei der
- das Sieb (22) eine Mehrzahl von parallelen Siebstäben (48) umfasst,
- wobei sich die Siebstäbe (48) schräg in Strömungsrichtung erstrecken.

7. Vorrichtung nach einem der vorangehenden Ansprüche, bei der
- das Sieb (22) eine Mehrzahl von Siebstäben (48) mit rechteckigem Querschnitt aufweist.

8. Vorrichtung nach einem der vorangehenden Ansprüche, bei der
- das Sieb (22) einen oder mehrere Zugstäbe (54) aufweist, die kreis- oder teilkreisförmig gebogen sind,
- wobei Siebstäbe (48) mit den Zugstäben (54) verbunden sind.

9. Vorrichtung nach Anspruch 8, bei der
- zwischen dem Siebstäben (48) Abstandhalter (65) angeordnet sind.

10. Vorrichtung nach einem der vorangehenden Ansprüche 6-9, bei der
- ein Teil der Siebstäbe (48) in treppenförmigen Absätzen (60) mindestens eines sich schräg in Strömungsrichtung erstreckenden Halteelements (52) endet.

11. Vorrichtung nach Anspruch 10, bei der
- die treppenförmigen Absätze (60) mittels Abdeckungen gebildet sind.

12. Vorrichtung nach einem der vorangehenden Ansprüche, bei der
- der Reinigungskörperabzug (26) einen zylindrischen an das Sieb (22) anschließenden Siebkorb (30) aufweist.

13. Reinigungssystem für einen Wärmetauscher, mit
- einer an einer Kühlwasserleitung stromaufwärts eines Wärmetauschers angeordneten Vorrichtung zur Einspeisung von Reinigungskörpern,
- und einer stromabwärts des Wärmetauschers angeordneten Vorrichtung zur Separierung der Reinigungskörper gemäß einem der vorangehenden Ansprüche.

14. Verfahren zur Separierung von Reinigungskörpern aus einem Fluidstrom, bei dem
- ein Fluidstrom innerhalb einer Rohrwandung (12) von einer Zustromseite (16) zu einer Abströmseite (18) geleitet wird,
- und der Fluidstrom mittels eines innerhalb der Rohrwandung (12) angeordneten Siebs (22) mit kegelstumpfförmiger Siebfläche gesiebt wird, so dass die Reinigungskörper in Richtung der Abströmseite (18) angeordneten Reinigungskörperabzug (26) geleitet werden,
- wobei eine Abhebevorrichtung (24) mit mindestens einem zu mindestens im Wesentlichen parallel zur Siebfläche (50) angeordneten Wirbelkörper (40) um eine Drehwelle (34) so rotiert, dass der Wirbelkörper (40) die Siebfläche (50) überstreicht,
- wobei zwischen dem Wirbelkörper (40) und der Siebfläche (50) ein Zwischenraum (68) gebildet ist,
- und wobei der Wirbelkörper (40) mindestens an einem zur Zustromseite (16) gerichteten Ende (72) eine Abdeckung (70) aufweist, durch die der Zwischenraum (68) mindestens zum Teil abgeschlossen ist.
